# EUROPÄISCHE PATENTSCHRIFT

(11) **EP 4 140 776 B1**
(45) Veröffentlichungstag und Bekanntmachung des Hinweises auf die Patenterteilung: **27.11.2024**
(21) Anmeldenummer: 22191496.3
(22) Anmeldetag: 22.08.2022
(51) Int. Cl.: B60C 11/13

(54) **FAHRZEUGLUFTREIFEN**
PNEUMATIC TYRE FOR VEHICLES
BANDAGE PNEUMATIQUE POUR VÉHICULE

(30) Priorität: 30.08.2021 DE 102021209457
(43) Veröffentlichungstag der Anmeldung: 01.03.2023
(73) Patentinhaber: Continental Reifen Deutschland GmbH, 30175 Hannover (DE)
(72) Erfinder: Özüduru, Ahmet, 30165 Hannover (DE); Soyyuece, Atakan, 30165 Hannover (DE); Ecke, Stefan, 30165 Hannover (DE)
(74) Vertreter: Continental Corporation

(56) Entgegenhaltungen:
- EP-A1- 2 050 589
- EP-A2- 3 015 287
- WO-A1-2012/043036

## Beschreibung

Die Erfindung betrifft einen Fahrzeugluftreifen mit einem Laufstreifen mit zumindest einer Profilblockreihe, welche an zumindest einer Seite von einer Umfangsrille begrenzt und mit in die Umfangsrille einmündenden, in Draufsicht zur axialen Richtung geneigt verlaufenden Querrillen in Profilblöcke mit Blockaußenflächen strukturiert ist, wobei die Profilblöcke an der Umfangsrille jeweils zumindest einen spitzwinkeligen Blockeckbereich aufweisen, wobei spitzwinkelige Blockeckbereiche vorgesehen sind, bei welchen die Blockecke abgeschrägt und ausgehend von der Blockaußenfläche eine in Draufsicht insgesamt dreieckige und stufenweise in radialer Richtung abfallende Treppenstruktur ausgebildet ist, welche von jeweils zwischen der Umfangsrille und der Querrille verlaufenden, abwechselnd aufeinanderfolgenden zur radialen Richtung unter einem ersten Winkel verlaufenden Stufenflächen und zur radialen Richtung unter einem gegenüber dem ersten Winkel kleiner ausgeführten zweiten Winkel verlaufenden Stoßflächen gebildet ist, wobei die radial innerste Stufenfläche in Draufsicht dreieckig ist und eine zur anschließenden Stoßfläche abgewandte Spitze aufweist und wobei die weiteren Stufenflächen in Draufsicht jeweils trapezförmig sind.

Ein derartiger Fahrzeugluftreifen ist beispielsweise aus der EP 2 050 589 A1 bekannt. Dieser Fahrzeugluftreifen weist einen Laufstreifen mit vier Umfangsrillen, einer mittigen Profilrippe, zwei halbmittigen Profilblockreihen und zwei schulterseitigen Profilblockreihen auf. Die halbmittigen Profilblockreihen sind durch in die Umfangsrillen einmündende, in Draufsicht zur axialen Richtung geneigt verlaufende Querrillen in halbmittige Profilblöcke strukturiert, welche an jeder angrenzenden Umfangsrille einen spitzwinkeligen Blockeckbereich und einen stumpfwinkeligen Blockeckbereich aufweisen. Es sind halbmittige Profilblöcke vorgesehen, deren spitzwinkeligen Blockeckbereiche jeweils mittels einer in Draufsicht dreieckigen Treppenstruktur aus Stufenflächen und Stoßflächen abgeschrägt sind. Die Stufenflächen und Stoßflächen verlaufen zwischen der jeweiligen Umfangsrille und der jeweiligen Querrille, wobei die radial innerste Stufenfläche dreieckig ist und die weiteren Stufenflächen trapezförmig sind. Die Treppenstruktur umfasst ferner einen Abriebindikator, welcher aus mehreren von der radial innersten Stufenfläche ausgehenden Vertiefungen gebildet ist. Die Treppenstruktur soll die Steifigkeit der Blockeckbereiche erhöhen und sorgt ferner dafür, dass der fortschreitende Abrieb des Laufstreifens mitverfolgbar ist.

Die WO 2012/043036 A1 offenbart einen Fahrzeugluftreifen mit einem Laufstreifen mit einem zentralen Laufstreifenbereich mit drei mittleren Profilblockreihen, welche durch Umfangsrillen voneinander getrennt und durch zur axialen Richtung geneigt verlaufende Querrillen in Profilblöcke strukturiert sind. Die Umfangsrillen weisen die Profilblöcke voneinander trennende, leicht S-förmig geschwungen verlaufende Umfangsrillenabschnitte auf, welche in die Querrillen übergehen und den Profilblöcken jeweils einen spitzwinkeligen, vorspringenden Blockeckbereich verleihen. An den spitzwinkeligen Blockeckbereichen sind die Blockecken ausgespart und zwei in radialer Richtung aneinander anschließende, jeweils radial nach innen gewölbte Flächen ausgebildet, welche eine treppenartige Struktur bilden bzw. begrenzen. Beim Fahren auf weichem Untergrund, beispielsweise auf Erde oder Schnee, wird durch die nach innen gewölbten Flächen die Kontaktfläche zum Untergrund vergrößert und die Reifenperformance verbessert.

Aus der EP 3 015 287 A2 ist ferner ein Fahrzeugluftreifen mit einem Laufstreifen mit schulterseitigen Profilblöcken, welche in Draufsicht von zick-zack-förmig verlaufenden, schulterseitigen Umfangsrillen mitbegrenzt sind, bekannt. Beim beschriebenen Ausführungsbeispiel sind schulterseitige Profilblockreihen vorgesehen, bei welchen abwechselnd ein schulterseitiger Profilblock mit einer an der jeweiligen Umfangsrille liegenden Aussparung auf einen schulterseitigen Profilblock mit einem spitzwinkeligen Blockeckbereich, welcher durch eine treppenartige Struktur abgeschrägt ist, folgt. Die treppenartige Struktur weist Stufenflächen und Stoßflächen auf, welche durch Rundungen miteinander verbunden sind und sorgt für eine verbesserte Traktion auf matschigem Untergrund sowie ferner für einen Schutz der schulterseitigen Umfangsrillen vor Steinen.

Ferner ist aus der DE 10 2018 216 549 A1 ein Fahrzeugluftreifen mit einem laufrichtungsgebunden ausgeführten Laufstreifen mit zumindest einer schulterseitigen Profilblockreihe bekannt, welche laufstreifeninnenseitig durch eine in Draufsicht gerade verlaufende Umfangsrille begrenzt ist. Diese Profilblockreihe ist mit in die Umfangsrille einmündenden Querrillen in schulterseitige Profilblöcke mit einlaufenden, spitzwinkeligen Blockeckbereichen und auslaufenden, stumpfwinkeligen Blockeckbereichen gegliedert. Die an der Umfangsrille liegende Blockflanke jedes schulterseitigen Profilblockes erscheint im in radialer Richtung ausgerichteten, in Draufsicht in axialer Richtung verlaufenden Querschnitt betrachtet, als gerade Linie, welche zur radialen Richtung unter einem Winkel verläuft, wobei der Winkel vom spitzwinkeligen Blockeckbereich zum stumpfwinkeligen Blockeckbereich kontinuierlich zunimmt, wodurch Vorteile im Hinblick auf die Nassbrems- und Aquaplaningeigenschaften erzielt werden. Gemäß einer Ausführung sind die spitzwinkligen Blockeckbereiche mit Eckfasen - dreieckigen, ebenen Flächen - abgeschrägt, welche die Wasserableitung weiter begünstigen.

Fahrzeugluftreifen mit Laufstreifen mit spitzwinkeligen Blockeckbereichen, deren Blockecke abgeschrägt sind, haben sich im Hinblick auf das Abriebverhalten als vorteilhaft erwiesen. Beim Fahren auf schneebedeckter Fahrbahn können die abgeschrägten Blockecken ein "Aufgleiten" des Reifens bewirken bzw. begünstigen, wodurch die Schneeperformance, insbesondere beim Fahren von Kurven, beeinträchtigt wird.

Der Erfindung liegt daher die Aufgabe zugrunde, bei einem Fahrzeugluftreifen der eingangs genannten Art, die Schneeperformance zu verbessern, wobei ein möglichst gleichmäßiges Abriebverhalten erhalten bleiben soll.

Gelöst wird die gestellte Aufgabe erfindungsgemäß dadurch, dass die Fläche der Stufenflächen ausgehend von der radial am weitesten außen liegenden Stufenfläche zur radial am weitesten innen liegenden Stufenfläche schrittweise von Stufenfläche zu Stufenfläche abnimmt.

Die erfindungsgemäß vorgesehene Treppenstruktur bewirkt beim Abrollen des Reifens auf Schnee eine besonders wirkungsvolle Verzahnung mit Schnee, wodurch insbesondere auch der Halt von Schnee in den Querrillen und den Umfangsrillen bei den Blockeckbereichen begünstigt und derart über den Effekt der Schnee-Schnee-Reibung die Schneeperformance verbessert ist. Zusätzlich bietet die Treppenstruktur weitere Griffkanten, welche insbesondere beim Fahren auf stark verschneiter Fahrbahn besonders wirkungsvoll den Schneegriff unterstützen und derart die Schneeperformance zusätzlich verbessern. Ein gleichmäßiges Abriebverhalten der Profilblöcke bleibt erhalten.

Eine bevorzugte Ausgestaltung ist dadurch gekennzeichnet, dass der erste Winkel, unter welchem die Stufenflächen zur radialen Richtung verlaufen, 78° bis 90°, insbesondere mindestens 82°, beträgt und / oder dass der zweite Winkel, unter welchem die Stoßflächen zur radialen Richtung verlaufen, 0° bis 12°, insbesondere 0,5° bis 7°, bevorzugt 1° bis 3°, beträgt. Eine derartige Winkelung der Stufenflächen und/oder der Stoßflächen sorgt für "scharfe" Griffkanten, welche beim Abrollen des Reifens auf Schnee in den Schnee besonders wirkungsvoll eindringen und derart die Schneeperformance weiter verbessern.

Bei einer weiteren bevorzugten Ausführung sind die Stufenflächen und die Stoßflächen zur radialen Richtung gleichsinnig geneigt sind, was vor allem für das Abriebverhalten günstig ist.

Gemäß einer bevorzugten Ausführung weist die Treppenstruktur zumindest drei Stufenflächen, insbesondere bis zu sieben Stufenflächen, bevorzugt bis zu sechs Stufenflächen, besonders bevorzugt vier oder fünf Stufenflächen auf. Eine solche Anzahl von Stufenflächen ist für den Verzahnungseffekt auf Schnee von weiterem Vorteil.

Gemäß einer weiteren bevorzugten Ausführung weist jede Stoßfläche eine radial äußere Begrenzungskante und eine radial innere Begrenzungskante auf, wobei die Begrenzungskanten jeweils in einer in radialer Richtung ermittelten konstanten Tiefe verlaufen. Derartige Begrenzungskanten bilden für den Schneegriff vorteilhafte Griffkanten.

Nachfolgend wird auf eine Vielzahl von bevorzugten Ausgestaltungen der letztgenannten bevorzugten Ausführung eingegangen, wobei diese Ausgestaltungen, falls nicht anders erwähnt, beliebig miteinander kombinierbar sind.

Gemäß einer ersten bevorzugten Ausgestaltung sind die Stufenflächen derart zur radialen Richtung geneigt, dass diese ausgehend von der sie mitbegrenzenden, radial innere Begrenzungskante der anschließenden Stoßfläche in Richtung radial nach innen abfallen. Diese Ausgestaltung ist für einen gleichmäßigen Abrieb günstig.

Gemäß einer zweiten bevorzugten Ausgestaltung verlaufen die Begrenzungskanten in Draufsicht parallel zueinander sowie in Draufsicht insbesondere gerade.

Eine bevorzugte Variante der zweiten bevorzugten Ausgestaltung besteht darin, dass die Begrenzungskanten in Draufsicht gerade und zur axialen Richtung unter einem Winkel von 25° bis 60°, insbesondere von bis zu 50°, bevorzugt von 30° bis 45°, verlaufen. Derart geneigte Begrenzungskanten tragen zu besonders gleichmäßigen Verbesserung des Schneegriffes sowohl bei verstärkt in Umfangsrichtung wirkenden Kräften, beispielsweise Traktions- und Bremskräften, als auch bei verstärkt in axialer Richtung wirkenden Kräften, welche insbesondere beim Fahren von Kurven auftreten, bei.

Gemäß einer dritten bevorzugten Ausgestaltung weist die radial äußere Begrenzungskante der radial äußersten Stoßfläche eine Länge von 2,0 mm bis 7,0 mm, insbesondere von mindestens 3,0 mm, auf.

Eine vierten bevorzugte Ausgestaltung ist dadurch gekennzeichnet, dass die die Steighöhe der Treppenstruktur definierende Abstände, welche in radialer Richtung zwischen den radial äußeren Begrenzungskanten von aufeinanderfolgenden Stoßflächen sowie gegebenenfalls zwischen der Spitze der in Draufsicht dreieckigen, radial innerste Stufenfläche und der radial äußeren Begrenzungskante der benachbarten Stoßfläche ermittelt sind, jeweils 0,6 mm bis 1,8 mm, insbesondere 0,8 mm bis 1,6 mm, betragen, wobei sämtliche Abstände vorzugsweise übereinstimmende Größen aufweisen. Diese Ausgestaltung verbessert ebenfalls den Schneeverzahnungseffekt der Treppenstruktur.

Eine fünfte bevorzugte Ausgestaltung ist dadurch gekennzeichnet, dass die Treppenstruktur derart ausgelegt ist, dass im in radialer Richtung verlaufenden und in Draufsicht senkrecht zu den Begrenzungskanten der Stoßflächen verlaufenden Querschnitt betrachtet, zumindest der Großteil der radial äußeren Begrenzungskanten, insbesondere sämtliche radial äußeren Begrenzungskanten, durch eine gerade verlaufende Linie verbindbar sind, welche zur radialen Richtung unter einem die Steigung der Treppenstruktur definierenden Winkel von 30° bis 60°, insbesondere von 35° bis 55°, verläuft. Eine derart "geneigte" Treppenstruktur ist in Hinblick auf einen optimalen Kompromiss zwischen der Schneeperformance und einem gleichmäßigen Abrieb von Vorteil.

Eine sechste bevorzugte Ausgestaltung sieht vor, dass die Stufenflächen, im in radialer Richtung verlaufenden in Draufsicht senkrecht zu den Begrenzungskanten der Stoßflächen verlaufenden Querschnitt betrachtet, eine parallel zur Laufstreifenperipherie gemessene Stufenbreite von 0,5 mm bis 2,0 mm, insbesondere von 0,7 mm bis 1,6 mm, aufweisen. Diese Ausführung verbessert vor allem die Schneeperformance weiter.

Gemäß einer weiteren bevorzugten Ausführung reicht die Treppenstruktur in radialer Richtung in eine gegenüber dem Niveau der Blockaußenfläche ermittelte, auf ihre tiefste Stelle bezogene Tiefe von 30% bis 70% der Profiltiefe. Die für die Schneeperformance vorteilhafte Wirkung der Treppenstruktur bleibt daher über den Laufstreifenabrieb erhalten. Ferner ist die entsprechende "Blockecke" deutlich ausgespart, was für das Abriebverhalten besonders günstig ist.

Eine weitere bevorzugte Ausführung ist dadurch gekennzeichnet, dadurch gekennzeichnet, dass die Profilblöcke, an deren spitzwinkeligen, abgeschrägten Blockeckbereichen jeweils eine Treppenstruktur ausgebildet ist, jeweils eine zum Rillengrund der Umfangsrille verlaufende seitliche Blockflanke aufweisen, wobei an der seitlichen Blockflanke eine zur Blockaußenfläche verlaufende, zur radialen Richtung geneigte Fase ausgebildet ist, welche, im in Draufsicht in axialer Richtung ausgerichteten Querschnitt betrachtet, zur radialen Richtung unter einem Winkel von 25° bis 60°, insbesondere von bis zu 55°, bevorzugt von 30° bis 50°, besonders bevorzugt von 35° bis 45°, verläuft und vorzugsweise eine in Richtung zur Treppenstruktur kontinuierlich abnehmende Fasenbreite aufweist. Blockflanken mit solchen Fasen sind aus der eingangs genannten DE 10 2018 216 549 A1 bekannt. Wie eingangs ebenfalls bereits erläutert, sind solche Fasen für die Nassbrems- und Aquaplaningeigenschaften von Vorteil. Solche Fasen können jedoch beim Fahren auf Schnee ein "Aufgleiten" des Reifens bewirken bzw. begünstigen. Durch die gemäß der Erfindung vorgesehenen Treppenstrukturen wird jedoch genau dies zuverlässig verhindert, sodass die Kombination aus angefasten Blockflanken und Treppenstrukturen sowohl eine sehr gute Schneeperformance als auch ein sehr gutes Wasserdrainagevermögen ermöglicht.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf einen schulterseitigen Ausschnitt eines in die Ebene abgewickelten Laufstreifens eines Fahrzeugluftreifens mit einer Ausführungsvariante der Erfindung,
Fig. 2 einen Schnitt entlang der Linie II-II der Fig. 1,
Fig. 3 eine vergrößerte Draufsicht auf das Detail Z₃ der Fig. 1,
Fig. 4 einen Schnitt entlang der Linie IV-IV der Fig. 3,
Fig. 5 einen Schnitt entlang der Linie V-V der Fig. 3 und
Fig. 6 eine Schrägansicht gemäß der in Fig. 3 durch Pfeil S₆ angedeuteten Sichtrichtung.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Leichte LKWs mit zGM ≤ 7,5 t), wobei die Reifen insbesondere zum Fahren unter winterlichen Fahrbedingungen vorgesehen sind.

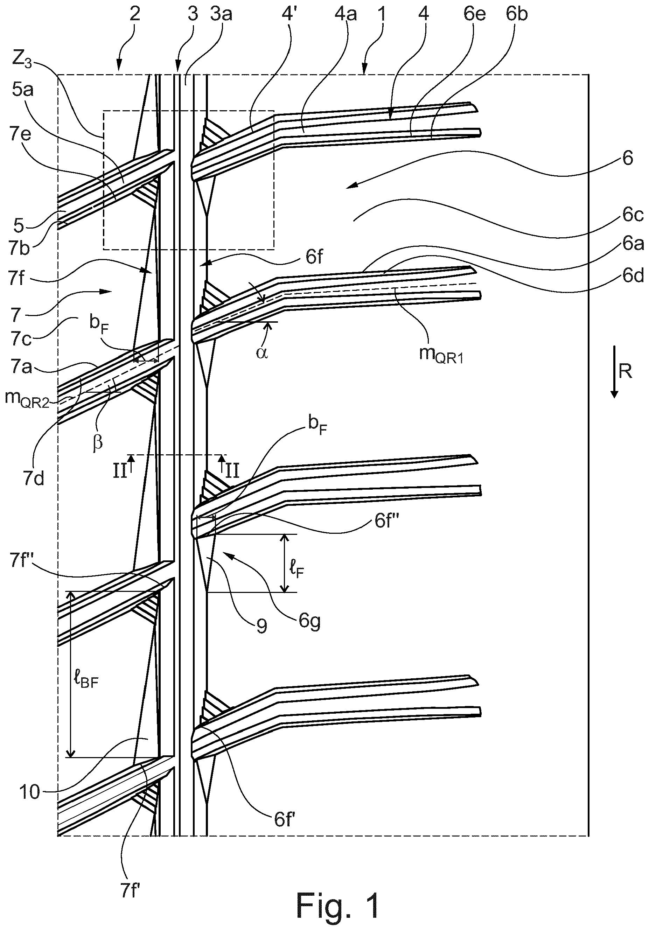

Fig. 1 zeigt eine Draufsicht auf einen schulterseitigen Umfangsabschnitt eines Laufstreifens eines Fahrzeugluftreifens. Der Laufstreifen ist laufrichtungsgebunden ausgeführt, wobei der Fahrzeugluftreifen derart am Fahrzeug zu montieren ist, dass er die in Fig. 1 durch den Pfeil R symbolisierte Abrollrichtung bei Vorwärtsfahrt aufweist.

Der Laufstreifen weist im gezeigten Ausschnitt eine schulterseitige Profilblockreihe 1, von welcher in Fig. 1 ein Umfangsabschnitt gezeigt ist, und eine mittlere Profilblockreihe 2, von welcher in Fig. 1 lediglich ein Teilbereich eines Umfangsabschnittes zu sehen ist, auf. Bevorzugter Weise nehmen die schulterseitige Profilblockreihe 1 und die mittlere Profilblockreihe 2 gemeinsam eine der Laufstreifenhälften ein.

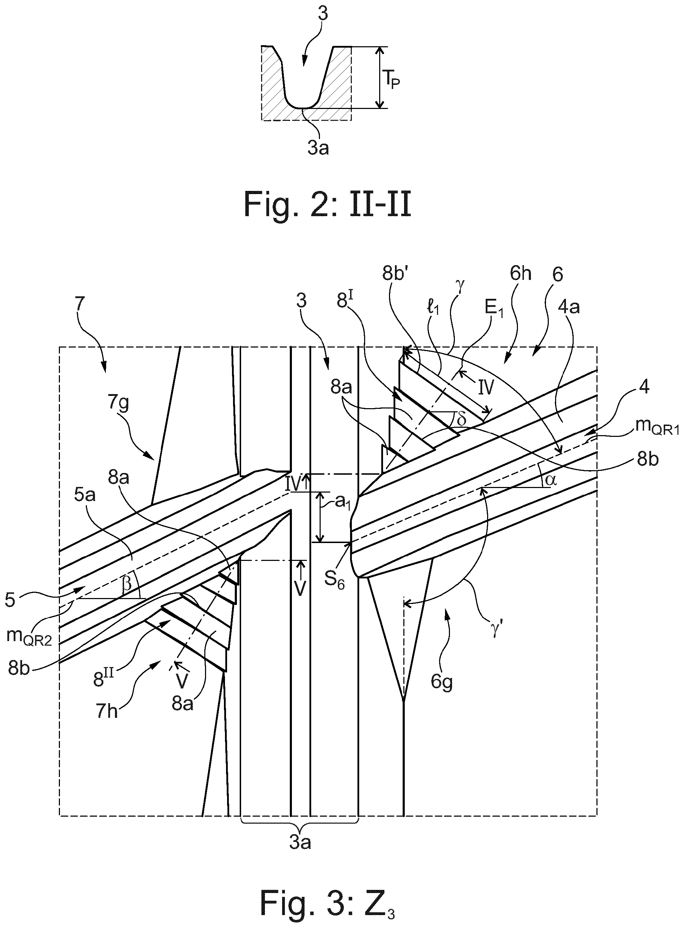

Die schulterseitige Profilblockreihe 1 und die mittlere Profilblockreihe 2 sind durch eine beim gezeigten Ausführungsbeispiel in Draufsicht gerade verlaufende, schulterseitige Umfangsrille 3 getrennt, welche in radialer Richtung auf die jeweils vorgesehene Profiltiefe T_{P} (Fig. 2), die für Personenkraftwagen, Vans oder Light-Trucks üblicherweise 6,5 mm bis 10,0 mm beträgt, ausgeführt ist und einen im Querschnitt U-förmig verlaufenden Rillengrund 3a (Fig. 2, Fig. 3) aufweist.

Die Profilblockreihen 1, 2 sind mit eine Vielzahl von Querrillen 4 (Profilblockreihe 1), 5 (Profilblockreihe 2) versehen, wobei die Querrillen 4, 5 innerhalb der jeweiligen Profilblockreihe 1, 2 in Draufsicht parallel zueinander verlaufen, in die schulterseitige Umfangsrille 3 einmünden, jeweils eine in Draufsicht dem Rillenverlauf folgende Rillenmittellinie m_{QR1} (Querrillen 4), m_{QR2} (Querrillen 5) aufweisen und der schulterseitigen Profilblockreihe 1 schulterseitige Profilblöcke 6 und der mittleren Profilblockreihe 2 mittlere Profilblöcke 7 verleihen. Die Querrillen 4 weisen jeweils einen Rillengrund 4a sowie einen ausgehend von einem Rillenknick zur schulterseitigen Umfangsrille 3 reichenden Rillenabschnitt 4' auf, welcher, in Draufsicht betrachtet und bezogen auf die jeweilige Rillenmittellinie m_{QR1}, zur axialen Richtung unter einem Winkel α von 5° bis 40°, insbesondere von bis zu 30°, verläuft. Die Querrillen 5 weisen jeweils einen Rillengrund 5a auf, verlaufen, in Draufsicht betrachtet und bezogen auf die Rillenmittellinien m_{QR2}, zur axialen Richtung unter einem Winkel β von 5° bis 40°, vorzugsweise von 10° bis 35°, und sind zu den Rillenabschnitten 4' bezüglich der axialen Richtung gleichsinnig geneigt. Gemäß Fig. 3 münden die Querrillen 4 und die Querrillen 5 - bezogen auf die an der schulterseitigen Umfangsrille 3 am Niveau ihrer Rillengründe 4a, 5a liegenden Enden ihrer Rillenmittellinien m_{QR1}, m_{QR2} - unter einem gegenseitigen in Umfangsrichtung ermittelten Versatz a₁ von bis zu 10,0 mm, insbesondere von bis zu 5,0 mm, in die schulterseitige Umfangsrille 3 ein.

Wie Fig. 1 zeigt, weisen die schulterseitigen Profilblöcke 6 und die mittleren Profilblöcke 7 an der einen angrenzenden Querrille 4 (Profilblock 6), 5 (Profilbock 7) jeweils eine Blockkante 6a (Profilblock 6), 7a (Profilblock 7) und an der anderen angrenzenden Querrille 4 (Profilblock 6), 5 (Profilblock 7) eine Blockkante 6b (Profiblock 6), 7b (Profilblock 7) auf. Beim Abrollen des Reifens bei Vorwärtsfahrt (Pfeil R) tritt bei jedem Profilblock 6, 7 die Blockkante 6a, 7a vor der Blockkante 6b, 7b in den Untergrund ein, sodass die Blockkante 6a, 7a auch als "einlaufende Blockkante" und die Blockkante 6b, 7b auch als "auslaufende Blockkante" bezeichnet wird.

Jeder Profilblock 6, 7 ist durch eine in der Laufstreifenperipherie liegende Blockaußenfläche 6c, 7c, eine von der einlaufenden Blockkante 6a, 7a ausgehende Blockflanke 6d, 7d, eine von der auslaufenden Blockkante 6b, 7b ausgehende Blockflanke 6e, 7e und eine an der Umfangsrille 3 ausgebildete, zu deren Rillengrund 3a verlaufende, seitliche Blockflanke 6f, 7f begrenzt. Gemäß Fig. 3 weist jeder Profilblock 6, 7 - entsprechend der erläuterten Winkelung (Winkel α, β) der Querrillen 4, 5 - an der schulterseitigen Umfangsrille 3 einen stumpfwinkeligen Blockeckbereich 6g, 7g und einen spitzwinkeligen Blockeckbereich 6h, 7h auf. Am spitzwinkeligen Blockeckbereich 6h, 7h schließt die jeweilige Querrille 4, 5 - in Draufsicht und bezogen auf ihre Rillenmittellinie m_{QR1}, m_{QR2} - mit der Umfangsrichtung einen über spitzwinkeligen Blockeckbereich 6h, 7h gemessenen, spitzen Supplementwinkel γ ein. Am stumpfwinkeligen Blockeckbereich 6g, 7g schließt die jeweilige Querrille 4, 5 - in Draufsicht und bezogen auf ihre Rillenmittellinie m_{QR1}, m_{QR2} - mit der Umfangsrichtung einen über den stumpfwinkeligen Blockeckbereich 6g, 7g gemessenen, stumpfen Supplementwinkel γ` ein. Die Supplementwinkel γ, γ` ergänzen sich in bekannter Weise auf 180°.

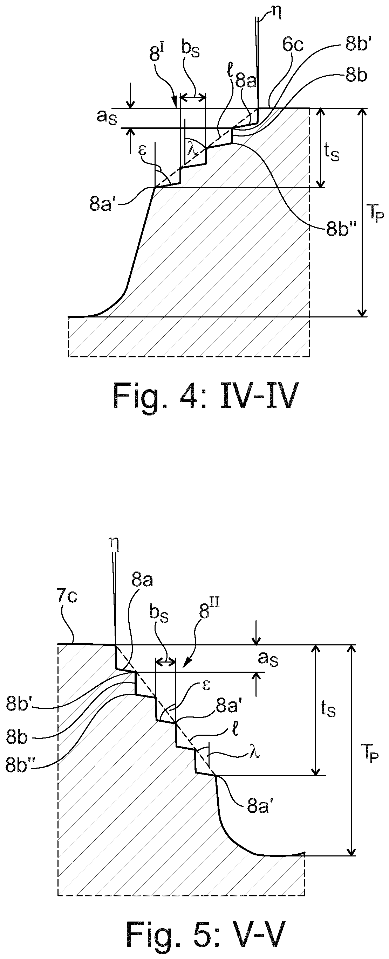

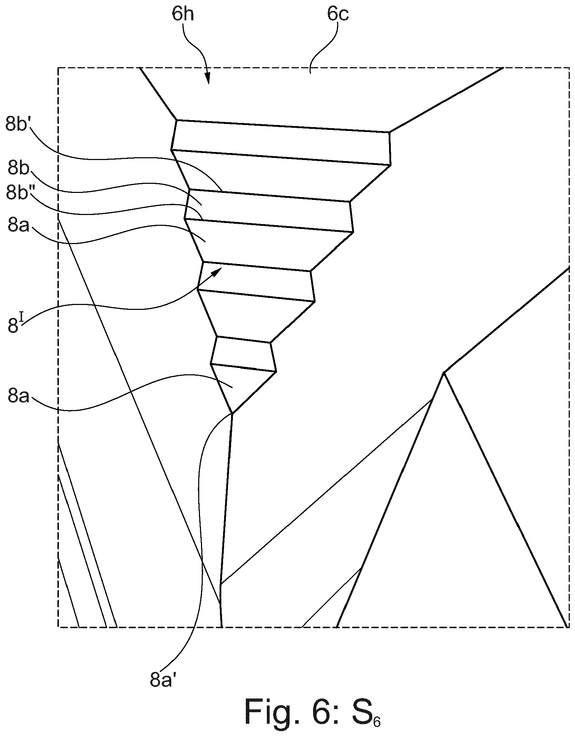

Wie Fig. 3 insbesondere in Kombination mit Fig. 6 zeigt, ist an den spitzwinkeligen Blockeckbereichen 6h, 7h jeweils eine die spitzwinkelige Blockecke abschrägende, in Draufsicht dreieckige, insbesondere gleichschenkelig-dreieckige (Fig. 3), eckfasenartige Treppenstruktur 8^{I} (Blockeckbereich 6h), 8^{II} (Blockeckbereich 7h) ausgebildet. Gemäß Fig. 4 bis Fig. 6 ist die Treppenstruktur 8^{I}, 8^{II} mehrfach gestuft, fällt ausgehend von der Blockaußenfläche 6c (Fig. 4, Fig. 6), 7c (Fig. 5) in radialer Richtung zur Spitze des zugehörigen spitzwinkeligen Blockeckbereiches 6h (Fig. 3 in Kombination mit Fig. 4), 7h (Fig. 3 in Kombination mit Fig. 5), also in radial nach innen liegender Richtung, stufenweise ab (Fig. 6: gezeigte für den Blockeckbereich 6h) und ist von Stufenflächen 8a und Stoßflächen 8b gebildet, wobei sich sowohl die Stufenflächen 8a als auch die Stoßflächen 8b zwischen der Umfangsrille 3 und der Querrille 4 bzw. 5 erstrecken (Fig. 6), die Treppenstruktur 8^{I}, 8^{II} ausgehend von der Blockaußenfläche 6c, 7c mit einer Stoßfläche 8b beginnt und an ihrem radial inneren Ende mit einer Stufenfläche 8a endet. Die Stufenflächen 8a und die Stoßflächen 8b sind jeweils ebene Flächen, wobei die Stufenflächen 8a zur radialen Richtung stärker geneigt sind als die Stoßflächen 8b und wobei beim Ausführungsbeispiel die Stufenflächen 8a und die Stoßflächen 8b zur radialen Richtung gleichsinnig geneigte Flächen sind (Fig. 4, Fig. 5). Gemäß Fig. 3 ist die Treppenstruktur 8^{I}, 8^{II} in radialer Richtung zumindest Großteils durch die Stufenflächen 8a begrenzt bzw. ist das in Draufsicht erscheinende Dreieck der Treppenstruktur 8^{I}, 8^{II} zumindest Großteils von den Stufenflächen 8a eingenommen. Bedingt durch die erwähnte, eckfasenartige Ausführung der Treppenstruktur 8^{I}, 8^{II} nimmt die Fläche (der Flächeninhalt) der Stufenflächen 8a ausgehend von der radial am weitesten außen liegenden Stufenfläche 8a zur radial am weitesten innen liegenden Stufenfläche 8a schrittweise von Stufenfläche 8a zu Stufenfläche 8a ab.

Wie Fig. 3 in Kombination mit Fig. 6 zeigt, ist die am weitesten radial innen liegende Stufenfläche 8a in Draufsicht (Fig. 3) dreieckig und weist eine radial innere Spitze 8a' auf. Die weiteren Stufenflächen 8a sind in Draufsicht trapezförmig (Fig. 3). Gemäß Fig. 4 bis Fig. 6 weisen die Stoßflächen 8b jeweils eine in Draufsicht (vergl. Fig. 3) gerade sowie parallel zur bzw. an der Laufstreifenperipherie (Fig. 6) verlaufende, radial äußere Begrenzungskante 8b' und eine in Draufsicht gerade und parallel zur Laufstreifenperipherie verlaufe radial innere Begrenzungskante 8b" auf, wobei - wie Fig 4 und Fig. 5 zeigen - die Neigung der Stufenflächen 8a derart ist, dass diese von der sie mitbegrenzenden, radial innere Begrenzungskante 8b" der einen angrenzenden Stoßfläche 8b zu der sie mitbegrenzenden, radial äußeren Begrenzungskante 8b` der anderen angrenzenden Stoßfläche 8b bzw. zur radial inneren Spitze 8a' in Richtung radial nach Innen abfallen. Die radial äußere Begrenzungskante 8b`, welche sich an der Blockaußenfläche 6c befindet, weist eine Länge I₁ (Fig. 3) von 2,0 mm bis 7,0 mm, insbesondere von mindestens 3,0 mm, auf. Sämtliche Begrenzungskanten 8b`, 8b" verlaufen, in Draufsicht betrachtet (siehe Fig. 6 in Kombination mit Fig. 3, wobei die Begrenzungskanten 8b" nur in Fig. 6 zu sehen sind), gerade, parallel zueinander sowie gemäß Fig. 3 zur axialen Richtung unter einem Winkel δ von 25° bis 60°, insbesondere von bis zu 50°, bevorzugt von 30° bis 45°.

Beim gezeigten Ausführungsbeispiel weist die Treppenstruktur 8^{I}, 8^{II} ferner eine in Draufsicht senkrecht zu den Begrenzungskanten 8b`, 8b" (Fig. 6) sowie durch die radial innere Spitze 8a' verlaufende, in radialer Richtung ausgerichtete Symmetrieebene E₁ (Fig. 3) auf. Fig. 4 zeigt den in der Symmetrieebene E₁ liegenden Querschnitt durch die Treppenstruktur 8^{I} und Fig. 5 zeigt den in der Symmetrieebene E₁ liegenden Querschnitt durch die Treppenstruktur 8^{II}.

Gemäß Fig. 4 und Fig. 5 liegt zwischen einander in radialer Richtung aufeinanderfolgenden radial äußeren Begrenzungskanten 8b' sowie zwischen der am weitesten radial innen befindlichen radial äußeren Begrenzungskante 8b` und der radial inneren Spitze 8a' jeweils ein in radialer Richtung ermittelter, die Steighöhe der Treppenstruktur 8^{I}, 8^{II} definierender Abstand as von 0,6 mm bis 1,8 mm, insbesondere von 0,8 mm bis 1,6 mm, vor, wobei die Abstände as bei jeder Treppenstruktur 8^{I}, 8^{II} vorzugsweise übereinstimmen.

Die Stoßflächen 8b verlaufen, im in radialer Richtung verlaufenden und in Draufsicht senkrecht zu den Begrenzungskanten 8b`, 8b" ausgerichteten Querschnitt betrachtet, zur radialen Richtung unter einem Winkel η von 0° bis 12°, insbesondere von 0,5° bis 7°, bevorzugt von 1° bis 3°. Jede Stufenfläche 8a verläuft, im erwähnten Querschnitt betrachtet, zur radialen Richtung unter einem Winkel ε von 78° bis 90°, insbesondere von zumindest 82°, und weist, ebenfalls in diesem Querschnitt betrachtet, eine parallel zur Laufstreifenperipherie gemessene Stufenbreite bs von 0,5 mm bis 2,0 mm, insbesondere von 0,7 mm bis 1,6 mm, auf, wobei die Stufenbreite bs der in die Laufstreifenperipherie projizierten Höhe des jeweiligen Trapezes bzw. des Dreiecks entspricht.

Die Ausgestaltung der Treppenstruktur 8^{I}, 8^{II} ist vorzugsweise ferner derart, dass, im in radialer Richtung verlaufenden und in Draufsicht senkrecht zu den Begrenzungskanten 8b`, 8b" ausgerichteten Querschnitt betrachtet, die im jeweiligen Querschnitt erscheinenden radial äußeren Begrenzungskanten 8b` und die im in der Symmetrieebene E₁ liegenden Querschnitt zusätzlich erscheinende radial innere Spitze 8a' jeweils durch eine gerade verlaufende Linie I verbindbar sind, welche zur radialen Richtung unter einem die Steigung der Treppenstruktur 8^{I}, 8^{II} definierenden Winkel λ von 30° bis 60°, insbesondere von 35° bis 55°, verläuft.

Die Treppenstruktur 8^{I}, 8^{II} reicht in radialer Richtung in eine gegenüber dem Niveau der Blockaußenfläche 6c, 7c ermittelte, auf ihre tiefste Stelle, beim Ausführungsbeispiel daher auf die radial innere Spitze 8a`, bezogene Tiefe ts, welche vorzugsweise 30% bis 70% der Profiltiefe T_{P} beträgt.

Die in Fig. 4 gezeigte Treppenstruktur 8^{I} weist vier Stufenflächen 8a auf, wobei deren Stufenbreite bs vorzugsweise 1,1 mm bis 1,5 mm, besonders bevorzugt von 1,2 mm bis 1,4 mm, beträgt. Die Abstände as betragen vorzugsweise 0,8 mm bis 1,2 mm. Der Winkel λ der beträgt vorzugsweise 45° bis 55°.

Die in Fig. 5 gezeigte Treppenstruktur 8^{II} weist fünf Stufenflächen 8a auf, wobei deren Stufenbreite bs vorzugsweise 0,8 mm bis 1,2 mm, besonders bevorzugt von 0,9 mm bis 1,2 mm, beträgt. Die Abstände as betragen vorzugsweise 1,2 mm bis 1,6 mm. Der Winkel λ der beträgt vorzugsweise 35° bis 40°.

Gemäß Fig. 1 weisen die seitlichen Blockflanken 6f, 7f am Rillengrund 3a der Umfangsrille 3 angrenzenden Bereich eine in Umfangsrichtung ermittelte Länge I_{BF} sowie an der einen angrenzenden Querrille 4 bzw. 5 ein beim Abrollen des Reifens bei Vorwärtsfahrt zuerst in den Untergrund eintretendes einlaufendes Ende 6f`, 7f` und an der anderen angrenzenden Querrille 4 bzw. 5 ein auslaufendes Ende 6f", 7f" auf. Ferner verfügen die Blockflanken 6f, 7f beim Ausführungsbeispiel jeweils über einen angefasten Umfangsabschnitt.

Die Blockflanke 6f ist lokal am stumpfwinkeligen Blockeckbereich 6g mit einer zu ihrem auslaufenden Ende 6f" verlaufenden, als Eckfase ausgeführten Fase 9 versehen, welche, am Niveau der Blockaußenfläche 6c eine in Umfangsrichtung ermittle Fasenlänge I_{F} von 25% bis 35% der Länge I_{BF} der zugehörigen seitlichen Blockflanke 6f aufweist und, jeweils im in Draufsicht in axialer Richtung ausgerichteten Querschnitt betrachtet (nicht gezeigt), zur radialen Richtung unter einem insbesondere konstantem Winkel von 25° bis 60°, insbesondere von bis zu 55°, bevorzugt von 30° bis 50°, besonders bevorzugt von 35° bis 45°, verläuft und eine an ihrem Niveau (also an der Fase 9 selbst) gemessene, ausgehend von der jeweiligen Querrille 4 in Richtung zur Treppenstruktur 8^{I} (Fig. 3) in Umfangsrichtung kontinuierliche abnehmende Fasenbreite b_{F} aufweist. Die Fasenbreite b_{F} beträgt an der breitesten Stelle, also an der Querrille 4, 2,0 mm bis 5,0 mm. Die Fase 9 läuft an der Blockaußenfläche 6c aus. Ferner kann sich der Winkel, unter welchem die Fase 9 im erwähnten Querschnitt verläuft, über die Umfangserstreckung der Fase 9 kontinuierlich ändern, sodass die Fase 9 eine sich verdrehende Fläche ist.

Die Blockflanke 7f ist mit einer vom ihrem einlaufendem Ende 7f` ausgehenden, bis zur Treppenstruktur 8^{II} (Fig. 3) reichenden Fase 10 versehen, welche, jeweils im in Draufsicht in axialer Richtung ausgerichteten Querschnitt betrachtet (nicht gezeigt), zur radialen Richtung unter einem insbesondere konstantem Winkel von 25° bis 60°, insbesondere von bis zu 55°, bevorzugt von 30° bis 50°, besonders bevorzugt von 35° bis 45°, verläuft und eine an ihrem Niveau (also an der Fase 10 selbst) gemessene, ausgehend von der jeweiligen Querrille 5 in Umfangsrichtung kontinuierliche abnehmende Fasenbreite b_{F} aufweist. Die Fasenbreite b_{F} beträgt an der breitesten Stelle, also an der Querrille 5, 2,0 mm bis 5,0 mm. Die Fase 10 läuft an der Blockaußenfläche 7c aus. Ferner kann sich der Winkel, unter welchem die Fase 10 im erwähnten Querschnitt verläuft, über die Umfangserstreckung der Fase 10 kontinuierlich ändern, sodass die Fase 10 eine sich verdrehende Fläche ist.

Die Erfindung ist auf das beschriebene Ausführungsbeispiel nicht beschränkt.

Die Stufenflächen können in einer konstanten Tiefe und somit parallel zur Laufstreifenperipherie verlaufen. Die Stoßflächen können, im Querschnitt betrachtet, in radialer Richtung verlaufen. Die seitlichen Blockflanken können fasenfrei ausgeführt sein. Es ist zumindest eine Profilblockreihe mit an einer Umfangsrille spitzwinkelige Blockeckbereiche aufweisenden Profilblöcken vorgesehen, wobei die in die Umfangsrille einmündenden, die spitzwinkeligen Blockeckbereiche mitbegrenzenden Querrillen sacknutartig innerhalb der Profilblockreihe enden oder die Profilblockreihe durchqueren. Es muss nicht jeder Profilblock der Profilblockreihe an seinem spitzwinkeligen Blockeckbereich mit einer Treppenstruktur versehen sein. Der Laufstreifen muss nicht laufrichtungsgebunden ausgeführt sein. Die Treppenstruktur weist vorzugsweise zumindest drei Stufenflächen, insbesondere bis zu sieben, bevorzugt bis zu sechs, besonders bevorzugt vier oder fünf, Stufenflächen auf.

### Bezugszeichenliste

- 1: schulterseitige Profilblockreihe
- 2: mittlere Profilblockreihe
- 3: schulterseitige Umfangsrille
- 3a: Rillengrund
- 4: Querrille
- 4': Rillenabschnitt
- 4a: Rillengrund
- 5: Querrille
- 5a: Rillengrund
- 6: schulterseitiger Profilblock
- 6a: einlaufende Blockkante
- 6b: auslaufende Blockkante
- 6c: Blockaußenfläche
- 6d: Blockflanke
- 6e: Blockflanke
- 6f: seitliche Blockflanke
- 6f': einlaufendes Ende
- 6f": auslaufendes Ende
- 6g: stumpfwinkliger Blockeckbereich
- 6h: spitzwinkeliger Blockeckbereich
- 7: mittlerer Profilblock
- 7a: einlaufende Blockkante
- 7b: auslaufende Blockkante
- 7c: Blockaußenfläche
- 7d: Blockflanke
- 7e: Blockflanke
- 7f: seitliche Blockflanke
- 7f': einlaufendes Ende
- 7f": auslaufendes Ende
- 7g: stumpfwinkliger Blockeckbereich
- 7h: spitzwinkeliger Blockeckbereich
- 8^{I},8^{II}: Treppenstruktur
- 8a: Stufenfläche
- 8a': radial innere Spitze
- 8b: Stoßfläche
- 8b': radial äußere Begrenzungskante
- 8b": radial innere Begrenzungskante
- 9: Fase
- 10: Fase
- a₁: Versatz
- a_{S}: Abstand
- b_{F}: Fasenbreite
- b_{S}: Stufenbreite
- E₁: Symmetrieebene
- I: Linie
- I₁: Länge
- I_{BF}: Länge
- I_{F}: Fasenlänge
- m_{QR1}, m_{QR2}: Rillenmittellinie
- t_{S}: Tiefe
- T_{P}: Profiltiefe
- R: Pfeil (Abrollrichtung)
- S₆: Pfeil (Sichtrichtung)
- Z₃: Detail
- α, β, δ, ε, λ, η: Winkel
- γ, γ': Supplementwinkel

## Patentansprüche

1. Fahrzeugluftreifen mit einem Laufstreifen mit zumindest einer Profilblockreihe (1, 2), welche an zumindest einer Seite von einer Umfangsrille (3) begrenzt und mit in die Umfangsrille (3) einmündenden, in Draufsicht zur axialen Richtung geneigt verlaufenden Querrillen (4, 5) in Profilblöcke (6, 7) mit Blockaußenflächen (6c, 7c) strukturiert ist, wobei die Profilblöcke (6, 7) an der Umfangsrille (3) jeweils zumindest einen spitzwinkeligen Blockeckbereich (6h, 7h) aufweisen, wobei spitzwinkelige Blockeckbereiche (6h, 7h) vorgesehen sind, bei welchen die Blockecke abgeschrägt und ausgehend von der Blockaußenfläche (6c, 7c) eine in Draufsicht insgesamt dreieckige und stufenweise in radialer Richtung abfallende Treppenstruktur (8^{I}, 8^{II}) ausgebildet ist, welche von jeweils zwischen der Umfangsrille (3) und der Querrille (4, 5) verlaufenden, abwechselnd aufeinanderfolgenden zur radialen Richtung unter einem ersten Winkel (ε) verlaufenden Stufenflächen (8a) und zur radialen Richtung unter einem gegenüber dem ersten Winkel (ε) kleiner ausgeführten zweiten Winkel (η) verlaufenden Stoßflächen (8b) gebildet ist, wobei die radial innerste Stufenfläche (8a) in Draufsicht dreieckig ist und eine zur anschließenden Stoßfläche (8b) abgewandte Spitze (8a`) aufweist und wobei die weiteren Stufenflächen (8a) in Draufsicht jeweils trapezförmig sind,
**dadurch gekennzeichnet,**
**dass** die Fläche der Stufenflächen (8a) ausgehend von der radial am weitesten außen liegenden Stufenfläche (8a) zur radial am weitesten innen liegenden Stufenfläche (8a) schrittweise von Stufenfläche (8a) zu Stufenfläche (8a) abnimmt.

2. Fahrzeugluftreifen nach Anspruch 1, **dadurch gekennzeichnet,**
**dass** der erste Winkel (ε), unter welchem die Stufenflächen (8a) zur radialen Richtung verlaufen, 78° bis 90°, insbesondere mindestens 82°, beträgt und / oder dass der zweite Winkel (η), unter welchem die Stoßflächen (8b) zur radialen Richtung verlaufen, 0° bis 12°, insbesondere 0,5° bis 7°, bevorzugt 1° bis 3°, beträgt.

3. Fahrzeugluftreifen nach Anspruch 1 oder 2, **dadurch gekennzeichnet, dass** die Stufenflächen (8a) und die Stoßflächen (8b) zur radialen Richtung gleichsinnig geneigt sind.

4. Fahrzeugluftreifen nach einem der Ansprüche 1 bis 3, **dadurch gekennzeichnet, dass** die Treppenstruktur (8^{I}, 8^{II}) zumindest drei Stufenflächen (8a), insbesondere bis zu sieben Stufenflächen (8a), bevorzugt bis zu sechs Stufenflächen (8a), besonders bevorzugt vier oder fünf Stufenflächen (8a) aufweist.

5. Fahrzeugluftreifen nach einem der Ansprüche 1 bis 4, **dadurch gekennzeichnet, dass** jede Stoßfläche (8b) eine radial äußere Begrenzungskante (8b`) und eine radial innere Begrenzungskante (8b") aufweist, wobei die Begrenzungskanten (8b`, 8b") jeweils in einer in radialer Richtung ermittelten konstanten Tiefe verlaufen.

6. Fahrzeugluftreifen nach Anspruch 5, **dadurch gekennzeichnet, dass** die Stufenflächen (8a) derart zur radialen Richtung geneigt sind, dass diese ausgehend von der sie mitbegrenzenden, radial innere Begrenzungskante (8b") der anschließenden Stoßfläche (8b) in Richtung radial nach innen abfallen.

7. Fahrzeugluftreifen nach Anspruch 5 oder 6, **dadurch gekennzeichnet, dass** die Begrenzungskanten (8b`, 8b") in Draufsicht parallel zueinander sowie in Draufsicht insbesondere gerade verlaufen.

8. Fahrzeugluftreifen nach Anspruch 7, **dadurch gekennzeichnet, dass** die Begrenzungskanten (8b`, 8b") in Draufsicht gerade und zur axialen Richtung unter einem Winkel (δ) von 25° bis 60°, insbesondere von bis zu 50°, bevorzugt von 30° bis 45°, verlaufen.

9. Fahrzeugluftreifgen nach einem der Ansprüche 5 bis 8, **dadurch gekennzeichnet, dass** die radial äußere Begrenzungskante (8b`) der radial äußersten Stoßfläche (8b) eine Länge (I₁) von 2,0 mm bis 7,0 mm, insbesondere von mindestens 3,0 mm, aufweist.

10. Fahrzeugluftreifen nach einem der Ansprüche 5 bis 9, **dadurch gekennzeichnet, dass** die Steighöhe der Treppenstruktur (8^{I}, 8^{II}) definierende Abstände (as), welche in radialer Richtung zwischen den radial äußeren Begrenzungskanten (8b`) von aufeinanderfolgenden Stoßflächen (8b) sowie gegebenenfalls zwischen der Spitze (8a`) der in Draufsicht dreieckigen, radial innerste Stufenfläche (8a) und der radial äußeren Begrenzungskante (8b`) der benachbarten Stoßfläche (8b) ermittelt sind, jeweils 0,6 mm bis 1,8 mm, insbesondere 0,8 mm bis 1,6 mm, betragen, wobei sämtliche Abstände (as) vorzugsweise übereinstimmende Größen aufweisen.

11. Fahrzeugluftreifen nach einem der Ansprüche 5 bis 10, **dadurch gekennzeichnet, dass** die Treppenstruktur (8^{I}, 8^{II}) derart ausgelegt ist, dass im in radialer Richtung verlaufenden und in Draufsicht senkrecht zu den Begrenzungskanten (8b`, 8b") der Stoßflächen (8b) verlaufenden Querschnitt betrachtet, zumindest der Großteil der radial äußeren Begrenzungskanten (8b`), insbesondere sämtliche radial äußeren Begrenzungskanten (8b`), durch eine gerade verlaufende Linie (I) verbindbar sind, welche zur radialen Richtung unter einem die Steigung der Treppenstruktur (8^{I}, 8^{II}) definierenden Winkel (λ) von 30° bis 60°, insbesondere von 35° bis 55°, verläuft.

12. Fahrzeugluftreifen nach einem der Ansprüche 5 bis 11, **dadurch gekennzeichnet, dass** die Stufenflächen (8a), im in radialer Richtung verlaufenden in Draufsicht senkrecht zu den Begrenzungskanten (8b`, 8b") der Stoßflächen (8b) verlaufenden Querschnitt betrachtet, eine parallel zur Laufstreifenperipherie gemessene Stufenbreite (bs) von 0,5 mm bis 2,0 mm, insbesondere von 0,7 mm bis 1,6 mm, aufweisen.

13. Fahrzeugluftreifen nach einem der Ansprüche 1 bis 12, **dadurch gekennzeichnet, dass** die Treppenstruktur (8^{I}, 8^{II}) in radialer Richtung in eine gegenüber dem Niveau der Blockaußenfläche (6c, 7c) ermittelte, auf ihre tiefste Stelle bezogene Tiefe (t_{S}) von 30% bis 70% der Profiltiefe (T_{P}) reicht.

14. Fahrzeugluftreifen nach einem der Ansprüche 1 bis 13, **dadurch gekennzeichnet, dass** die Profilblöcke (6, 7), an deren spitzwinkeligen, abgeschrägten Blockeckbereichen (6h, 7h) jeweils eine Treppenstruktur (8^{I}, 8^{II}) ausgebildet ist, jeweils eine zum Rillengrund (3a) der Umfangsrille (3a) verlaufende seitliche Blockflanke (6f, 7f) aufweisen, wobei an der seitlichen Blockflanke (6f, 7f) eine zur Blockaußenfläche (6c, 7c) verlaufende, zur radialen Richtung geneigte Fase (9, 10) ausgebildet ist, welche, im in Draufsicht in axialer Richtung ausgerichteten Querschnitt betrachtet, zur radialen Richtung unter einem Winkel von 25° bis 60°, insbesondere von bis zu 55°, bevorzugt von 30° bis 50°, besonders bevorzugt von 35° bis 45°, verläuft und vorzugsweise eine in Richtung zur Treppenstruktur (8^{I}, 8^{II}) kontinuierlich abnehmende Fasenbreite (b_{F}) aufweist.

## Claims

1. Pneumatic vehicle tyre having a tread with at least one profile-block row (1, 2) which is delimited at at least one side by a circumferential groove (3) and which is structured into profile blocks (6, 7) with block outer surfaces (6c, 7c) by way of transverse grooves (4, 5) opening into the circumferential groove (3) and, in plan view, extending in an inclined manner in relation to the axial direction, wherein the profile blocks (6, 7) each have at least one acute-angled block corner region (6h, 7h) at the circumferential groove (3), wherein provision is made of acute-angled block corner regions (6h, 7h) at which the block corner is bevelled and at which, proceeding from the block outer surface (6c, 7c), there is formed a stepped structure (8^{I}, 8^{II}), said stepped structure being triangular overall in plan view and descending in steps in a radial direction and being formed by step surfaces (8a), which extend at a first angle (ε) to the radial direction, and abutting surfaces (8b), which extend at a second angle (η) to the radial direction, which is configured to be smaller than the first angle (ε), to the radial direction, that follow one another in an alternating manner and in each case extend between the circumferential groove (3) and the transverse groove (4, 5), wherein the radially innermost step surface (8a) is triangular in plan view and has a tip (8a`) which is directed away from the adjoining abutting surface (8b), and wherein the further step surfaces (8a) are each trapeziform in plan view,
**characterized**
**in that**, from the radially outermost step surface (8a) to the radially innermost step surface (8a), the area of the step surfaces (8a) decreases in steps from step surface (8a) to step surface (8a).

2. Pneumatic vehicle tyre according to Claim 1, **characterized**
**in that** the first angle (ε) at which the step surfaces (8a) extend to the radial direction is 78° to 90°, in particular at least 82°, and/or
**in that** the second angle (η) at which the abutting surfaces (8b) extend to the radial direction is 0° to 12°, in particular 0.5° to 7°, preferably 1° to 3°.

3. Pneumatic vehicle tyre according to Claim 1 or 2, **characterized in that** the step surfaces (8a) and the abutting surfaces (8b) are inclined in the same direction in relation to the radial direction.

4. Pneumatic vehicle tyre according to one of Claims 1 to 3, **characterized in that** the stepped structure (8^{I}, 8^{II}) has at least three step surfaces (8a), in particular up to seven step surfaces (8a), preferably up to six step surfaces (8a), particularly preferably four or five step surfaces (8a).

5. Pneumatic vehicle tyre according to one of Claims 1 to 4, **characterized in that** each abutting surface (8b) has a radially outer delimiting edge (8b`) and a radially inner delimiting edge (8b"), wherein the delimiting edges (8b`, 8b") in each case extend at a depth, as determined in the radial direction, which is constant.

6. Pneumatic vehicle tyre according to Claim 5, **characterized in that** the step surfaces (8a) are inclined in relation to the radial direction in such a way as to descend in the radially inward direction from the radially inner delimiting edge (8b") of the adjoining abutting surface (8b) that delimits them.

7. Pneumatic vehicle tyre according to Claim 5 or 6, **characterized in that** the delimiting edges (8b`, 8b") extend parallel to one another in plan view and in particular in a straight manner in plan view.

8. Pneumatic vehicle tyre according to Claim 7, **characterized in that**, in plan view, the delimiting edges (8b`, 8b") extend in a straight manner and at an angle (δ) of 25° to 60°, in particular of up to 50°, preferably of 30° to 45°, to the axial direction.

9. Pneumatic vehicle tyre according to one of Claims 5 to 8, **characterized in that** the radially outer delimiting edge (8b`) of the radially outermost abutting surface (8b) has a length (I₁) of 2.0 mm to 7.0 mm, in particular of at least 3.0 mm.

10. Pneumatic vehicle tyre according to one of Claims 5 to 9, **characterized in that** the distances (aₛ) determined in the radial direction between the radially outer delimiting edges (8b`) of abutting surfaces (8b) following one another and possibly between the tip (8a`) of the radially innermost step surface (8a), which is triangular in plan view, and the radially outer delimiting edge (8b`) of the adjacent abutting surface (8b), which distances define the slope height of the stepped structure (8^{I}, 8^{II}), are in each case 0.6 mm to 1.8 mm, in particular 0.8 mm to 1.6 mm, wherein all the distances (aₛ) preferably have matching magnitudes.

11. Pneumatic vehicle tyre according to one of Claims 5 to 10, **characterized in that** the stepped structure (8^{I}, 8^{II}) is configured in such a way that, when viewed in a cross section extending in the radial direction and extending perpendicularly to the delimiting edges (8b`, 8b") of the abutting surfaces (8b) in plan view, at least the majority of the radially outer delimiting edges (8b`), in particular all the radially outer delimiting edges (8b`), are connectable by a line (I) which extends in a straight manner and which extends at an angle (λ), which defines the slope of the stepped structure (8^{I}, 8^{II}), of 30° to 60°, in particular of 35° to 55°, to the radial direction.

12. Pneumatic vehicle tyre according to one of Claims 5 to 11, **characterized in that** the step surfaces (8a), when viewed in a cross section extending in the radial direction and extending perpendicularly to the delimiting edges (8b`, 8b") of the abutting surfaces (8b) in plan view, have a step width (bₛ), as measured parallel to the tread periphery, of 0.5 mm to 2.0 mm, in particular of 0.7 mm to 1.6 mm.

13. Pneumatic vehicle tyre according to one of Claims 1 to 12, **characterized in that** the stepped structure (8^{I}, 8^{II}) reaches in a radial direction a depth (tₛ), determined in relation to the level of the block outer surface (6c, 7c) and based on its lowest point, of 30% to 70% of the profile depth (T_{P}).

14. Pneumatic vehicle tyre according to one of Claims 1 to 13, **characterized in that** the profile blocks (6, 7) on whose acute-angled, bevelled block corner regions (6h, 7h) a respective stepped structure (8^{I}, 8^{II}) is formed, in each case have a lateral block flank (6f, 7f) which extends to the groove base (3a) of the circumferential groove (3a), wherein, on the lateral block flank (6f, 7f), there is formed a bevel (9, 10) which extends to the block outer surface (6c, 7c) and which is inclined in relation to the radial direction and which, when viewed in a cross section which is oriented in the axial direction in plan view, extends at an angle of 25° to 60°, in particular of up to 55°, preferably of 30° to 50°, particularly preferably of 35° to 45°, to the radial direction and preferably has a bevel width (b_{F}) which decreases continuously in the direction of the stepped structure (8^{I}, 8^{II}).

## Revendications

1. Bandage pneumatique pour véhicule, avec une bande de roulement ayant au moins une rangée de blocs profilés (1, 2), qui est délimitée sur au moins un côté par une rainure circonférentielle (3) et qui est structurée avec des rainures transversales (4, 5) débouchant dans la rainure périphérique (3) et s'étendant, en vue de dessus, de manière inclinée par rapport à la direction axiale, dans des blocs profilés (6, 7) avec des surfaces extérieures (6c, 7c) de bloc, les blocs profilés (6, 7) présentant chacun au niveau de la rainure circonférentielle (3) au moins une zone d'angle de bloc (6h, 7h) à angle aigu, des zones d'angle de bloc (6h, 7h) à angle aigu étant prévues, dans lesquelles l'angle de bloc est biseauté et, à partir de la surface extérieure de bloc (6c, 7c) est formée une structure en escalier (8I, 8II) globalement triangulaire en vue de dessus et descendant par paliers dans la direction radiale, qui est formée par des surfaces de marches (8a) s'étendant respectivement entre la rainure circonférentielle (3) et la rainure transversale (4, 5) et se succédant en alternance selon un premier angle (ε) par rapport à la direction radiale et des surfaces de butée (8b) s'étendant selon un deuxième angle (η) plus petit que le premier angle (ε) par rapport à la direction radiale, la surface de marche (8a) radialement la plus intérieure étant triangulaire en vue de dessus et présentant une pointe (8a') opposée à la surface de buté (8b) adjacente, et les autres surfaces de marches (8a) étant chacune trapézoïdale en vue de dessus,
**caractérisé**
**en ce que** la surface des surfaces de marches (8a) diminue progressivement de surface de marche (8a) en surface de marche (8a) en partant de la surface de marche (8a) située radialement le plus à l'extérieur vers la surface de marche (8a) située radialement le plus à l'intérieur.

2. Bandage pneumatique pour véhicule selon la revendication 1, **caractérisé en ce que** le premier angle (ε) sous lequel les surfaces de marches (8a) s'étendent par rapport à la direction radiale est de 78° à 90°, en particulier d'au moins 82°, et / ou
**en ce que** le deuxième angle (η), sous lequel les surfaces de butée (8b) s'étendent par rapport à la direction radiale, est de 0° à 12°, en particulier de 0,5° à 7°, de préférence de 1° à 3°.

3. Bandage pneumatique pour véhicule selon la revendication 1 ou la revendication 2, **caractérisé en ce que** les surfaces de marches (8a) et les surfaces de butée (8b) sont inclinées dans le même sens par rapport à la direction radiale.

4. Bandage pneumatique pour véhicule selon l'une des revendications 1 à 3, **caractérisé en ce que** la structure en escalier (8I, 8II) comporte au moins trois surfaces de marches (8a), notamment jusqu'à sept surfaces de marches (8a), de préférence jusqu'à six surfaces de marches (8a), de façon encore préférée quatre ou cinq surfaces de marches (8a).

5. Bandage pneumatique pour véhicule selon l'une des revendications 1 à 4, **caractérisé en ce que** chaque surface de butée (8b) présente une arête de délimitation radialement extérieure (8b') et une arête de délimitation radialement intérieure (8b"), les arêtes de délimitation (8b', 8b") s'étendant chacune à une profondeur constante déterminée dans la direction radiale.

6. Bandage pneumatique pour véhicule selon la revendication 5, **caractérisé en ce que** les surfaces de marches (8a) sont inclinées par rapport à la direction radiale de telle sorte qu'elles s'abaissent en direction radiale vers l'intérieur à partir de l'arête de délimitation radialement intérieure (8b"), qui les délimite également, de la surface de butée (8b) qui s'y raccorde.

7. Bandage pneumatique pour véhicule selon la revendication 5 ou la revendication 6, **caractérisé en ce que** les arêtes de délimitation (8b', 8b") sont parallèles l'une à l'autre en vue de dessus et sont en particulier droites en vue de dessus.

8. Bandage pneumatique pour véhicule selon la revendication 7, **caractérisé en ce que** les arêtes de délimitation (8b', 8b") sont droites en vue de dessus et s'étendent par rapport à la direction axiale selon un angle (δ) allant de 25° à 60°, en particulier allant jusqu'à 50°, de préférence de 30° à 45°.

9. Bandage pneumatique pour véhicule selon l'une des revendications 5 à 8, **caractérisée en ce que** le bord de délimitation radialement extérieur (8b') de la surface de butée (8b) radialement la plus extérieure présente une longueur (11) allant de 2,0 mm à 7,0 mm, en particulier d'au moins 3,0 mm.

10. Bandage pneumatique pour véhicule selon l'une des revendications 5 à 9, **caractérisé en ce que** des distances (aS) définissant la hauteur de montée de la structure d'escalier (8^{I}, 8^{II}) sont prévues dans la direction radiale entre les bords de délimitation radialement extérieurs (8b') de surfaces de butée successives (8b) ainsi que, le cas échéant, entre le sommet (8a') de la surface de butée triangulaire en vue de dessus, radialement la plus intérieure (8a) et le bord de délimitation radialement extérieur (8b') de la surface de butée (8b) adjacente, sont respectivement de 0,6 mm à 1,8 mm, en particulier de 0,8 mm à 1,6 mm, toutes les distances (as) présentant de préférence des tailles concordantes.

11. Bandage pneumatique pour véhicule selon l'une des revendications 5 à 10, **caractérisé en ce que** la structure en escalier (8I, 8II) est conçue de telle sorte que, dans la section transversale s'étendant dans la direction radiale et, en vue de dessus, perpendiculairement aux bords de délimitation (8b', 8b") des surfaces de butée (8b), au moins la majeure partie des arêtes de délimitation radialement extérieures (8b'), en particulier toutes les arêtes de délimitation radialement extérieures (8b'), peuvent être reliées par une ligne droite (I) qui s'étend par rapport à la direction radiale selon un angle (λ) allant de 30° à 60°, en particulier de 35° à 55°, définissant la pente de la structure en escalier (8^{I}, 8^{II}).

12. Bandage pneumatique pour véhicule selon l'une des revendications 5 à 11, **caractérisé en ce que** les surfaces de marches (8a), considérées dans la section transversale s'étendant dans la direction radiale, en vue de dessus, perpendiculairement aux arêtes de délimitation (8b', 8b") des surfaces de butée (8b), présentent une largeur de marche (bS), mesurée parallèlement à la périphérie de la bande de roulement, allant de 0,5 mm à 2,0 mm, en particulier de 0,7 mm à 1,6 mm.

13. Bandage pneumatique pour véhicule selon l'une des revendications 1 à 12, **caractérisé en ce que** la structure en escalier (8^{I}, 8^{II}) s'étend radialement jusqu'à une profondeur (tS), déterminée par rapport au niveau de la surface extérieure du bloc (6c, 7c) et rapportée à son point le plus bas, comprise entre 30% et 70% de la profondeur (TP) du profil.

14. Bandage pneumatique pour véhicule selon l'une des revendications 1 à 13, **caractérisé en ce que** les blocs de profil (6, 7), sur les zones de coin de bloc (6h, 7h) à angle aigu et biseautées desquels se trouve respectivement une structure en escalier (8^{I}, 8^{II}), présentent chacun un flanc de bloc latéral (6f, 7f) s'étendant vers le fond de rainure (3a) de la rainure circonférentielle (3a), un flanc de bloc latéral (6f, 7f) présentant une surface extérieure de bloc (6c, 7c) s'étendant vers la surface extérieure de bloc (6c, 7c), incliné par rapport à la direction radiale (9, 10), lequel, vu en coupe transversale orientée dans la direction axiale en vue de dessus, s'étend par rapport à la direction radiale selon un angle allant de 25° à 60°, en particulier allant jusqu'à 55°, de préférence de 30° à 50°, de manière particulièrement préférée de 35° à 45°, et présente de préférence une largeur de chanfrein (bF) qui diminue de manière continue en direction de la structure en escalier (8^{I}, 8^{II}).
